## Europäisches Patentamt

## European Patent Office

## Office européen des brevets

(11) Publication number: **0 036 047**
**B1**

(12) **EUROPEAN PATENT SPECIFICATION**

(45) Date of publication of patent specification: **05.12.84**

(21) Application number: **80300732.7**

(22) Date of filing: **10.03.80**

(51) Int. Cl.³: **F 01 C 1/063, F 02 B 53/02**

(54) **Rotary-piston internal combustion engine.**

(43) Date of publication of application:
**23.09.81 Bulletin 81/38**

(45) Publication of the grant of the patent:
**05.12.84 Bulletin 84/49**

(84) Designated Contracting States:
**AT BE CH DE FR GB IT LU NL SE**

(56) References cited:
**DE-A-2 450 436**
**DE-A-2 605 343**
**DE-C- 262 296**
**DE-U-1 832 253**
**GB-A-2 029 509**
**US-A-1 547 991**
**US-A-1 739 104**
**US-A-1 940 049**
**US-A-2 328 799**
**US-A-2 353 065**

(73) Proprietor: **Rigterink, Dale Lee**
**237, Van Raalte Avenue**
**Holland, Michigan (US)**

(72) Inventor: **Rigterink, Dale Lee**
**237, Van Raalte Avenue**
**Holland, Michigan (US)**

(74) Representative: **Roos, Michael John et al**
**KILBURN & STRODE 30 John Street**
**London WC1N 2DD (GB)**

Courier Press, Leamington Spa, England.

## Description

This invention relates to rotary internal combustion engines.

A typical internal combustion engine of the reciprocating piston type includes a combustion space in which a piston is movable. The compression of a fuel mixture in the cylinder by the piston, when ignited, increases the pressure within the cylinder and drives the piston and the cylinder heads apart. At the end of the power stroke, an exhaust port opens releasing the burned gases. A new fuel mixture is compressed and the cycle repeats itself.

Various attempts have been made in the past to provide a rotary internal combustion engine wherein the pistons do not reverse direction as in a reciprocating piston engine but rather move relative to the cylinders which rotate with the cylinder housing through an arcuate path. Representative prior art patents illustrating such devices are shown, for example, in U.S. Patents 1,547,991 issued July 28, 1925 to A. F. Wood et al. entitled "Rotary Gas Engine": 1,940,049 issued December 19, 1933 to J. Dap entitled "Machine Having Pistons and Cylinders Arranged Around A Circumference": 2,328,799 issued September 7, 1943 to J. A. Gaylord entitled "Rotary Piston Mechanism"; and 2,353,065 issued July 4, 1944 to H. E. Petrilli entitled "Diesel Engine". In each of the above mentioned and other prior art patents, the cylinder is disposed circumferentially with respect to the crank shaft or equivalent component and moves in a rotary manner with respect thereto. The basic drawback of these prior art devices resides in the complex mechanisms involved for holding or locking the piston in position to prevent retrograde movement during the power stroke and to shift the piston within the cylinder in the opposite direction during the corresponding compression stroke. The mechanisms for holding and returning the piston during the various strokes have typically involved gear mechanisms, cam and cam follower mechanisms, wobble plates and the like to cause movement of the pistons while maintaining a continuous rotation of the cylinder and housing. Such prior art devices have not won widespread commercial acceptance as they were extremely large, complicated and subject to failure with breakage or wear of the mechanical meshing components.

German Offenlegungsschrift Specification DE—A—2450436 discloses a rotary internal combustion engine with a two-part rotary piston assembly comprising a rotary piston ring mounted on an output shaft and a co-operating rotary piston disc journalled for rotation within and coaxially with the piston ring, arcuate circumferentially-extending combustion chambers of circular section being defined between the piston ring and the piston disc. A circular piston plate carried by the piston disc is movable circumferentially in each combustion chamber by the rotation of the piston disc relative to the piston ring. So-called catch-up springs are connected between the piston ring and the piston disc to bias the piston plates carried by piston disc circumferentially towards the closed ends of the combustion chambers, these springs serving to effect the compression stroke and compress fuel mixture in the combustion chambers. On ignition of the fuel mixture in each combustion chamber, reverse movement of the piston disc under the pressure of the expanding combustion gases is prevented by a so-called reverse-stop device, for example a grip roller clutch, acting between the piston disc and the fixed housing structure of the engine, so that the combustion gas pressure forces the piston ring to rotate with the output shaft during the power stroke. At the end of the power stroke, the catch-up springs rotate the piston disc relatively to the piston ring to force the movable piston plates to expel the combustion gases and effect the next compression stroke.

According to the present invention, a rotary-piston internal combustion engine comprising a rotary combustion chamber housing connected to a first shaft which is mounted for rotation in a fixed structure, the housing being rotatable about the axis of the shaft, a piston which is movable circumferentially with respect to the axis of the first shaft in a cooperating circumferentially-extending combustion chamber within said housing, the piston being operatively connected to a second shaft rotatably mounted in the stationary structure and coaxial with the first shaft, spring biassing means acting between the said housing and the piston to cause the piston to move relatively to the said housing in a compression stroke in the combustion chamber to compress a fuel mixture within the combustion chamber, ignition means for igniting the compressed fuel mixture in the combustion chamber at a predetermined position of the piston thereby to initiate a power stroke, and means for holding the piston stationary during at least the commencement of the power stroke whereby the rotary combustion chamber housing and the first shaft are caused to rotate, is characterised in that this piston is operatively connected with a second shaft in the form of a sleeve journalled for rotation on the first shaft about the axis thereof, and that the said means for holding the piston stationary comprises a brake acting between the stationary structure and the sleeve, and that the spring biassing means comprises at least one coil spring having ends operatively connected respectively to the first shaft and to the sleeve, and includes means for adjusting the biassing spring means so as to vary the compression ratio of the engine.

The brake means may comprise a disc connected to the sleeve and pair of brake members mounted one on each side of the disc between it and the stationary structure. The disc and the brake members may have axially-facing contacting friction faces and for the brake members and the stationary structure may have cooperating generally axially-facing wedging surfaces arranged to cause engagement of the friction faces on movement of the brake members in the opposition direction to the said rotation of the combustion chamber housing and first shaft.

The invention may be carried into practice in various ways but one specific embodiment will now be described, by way of example, with reference to the accompanying drawings, in which:—

FIGURE 1 is a side view of an engine mounting support structure;

FIGURE 2 is an end view of the supporting structure as viewed along the line II—II of Figure 1;

FIGURE 3 is a sectional side elevation of the engine as viewed generally along the plane III—III of Figure 2;

FIGURE 4 is a cross-section taken generally along the plane IV—IV of Figure 3;

FIGURES 5a—5m are series of views showing in exploded form the engine shown in Figures 1—4;

FIGURE 6 is an enlarged cross-section illustrating the exhaust valve actuating mechanisms;

FIGURES 7a and 7b are fragmentary views illustrating the exhaust manifold system incorporated in the present invention;

FIGURE 8 is a perspective view of the engine axle or shaft to which the engine housing and associated parts are fixed for rotation;

FIGURE 9 is a circuit diagram illustrating the control circuits for the engine of the present invention, and

FIGURE 10 is an enlarged fragmentary view of the electromagnet and holder assembly shown in Figure 3.

The embodiment to be described provides an improved rotary internal combustion engine wherein a shaft forming an axis of rotation includes, as an integral part therewith, a surrounding rotatable cylinder housing fixed to the shaft and having arcuate toroidal-shaped cylinders or combustion chambers formed therein concentric to the shaft. The shaft and housing are rotatably journalled in a supporting framework. Pistons are positioned to coact in the cylinders to provide alternating power and compression strokes as in a two-cycle operation. The invention includes a brake for fixing the pistons with respect to the supporting framework during the power stroke to prevent retrograde movement. The piston is fixed upon the initiation of ignition i.e., the power stroke, and the housing and supportive shaft are urged to rotate with respect to the framework. The brake for fixing the piston with respect to the framework is adapted to release the piston with respect to the framework after the power stroke whereby the pistons will rotate with the housing. Additionally, spring means is provided for urging the pistons, during rotation, in the same direction of rotation to advance the pistons into the cylinders to provide a compression stroke.

More specifically, the engine includes a piston that reciprocates within the cylinder at a constant radius in a plane perpendicular to a central axis. The cylinders are held in a relatively fixed position with respect to a central axis or shaft in a housing. The pistons are each fixed to a piston rod and supported by a torque arm freely movable around the shaft on a torque sleeve. The sleeve forms a continuous concentric ring about the shaft and extends to the outside of the engine housing where it is fixed to a brake mechanism that limits the motion of the piston when combustion occurs. In operation, during combustion, the brake momentarily holds the piston stationary while the cylinder heads and housing are forced apart from the piston. The cylinder head, engine housing and the shaft are then in rotary motion.

After the power stroke, when the piston and cylinder head are at maximum distance apart, the brake is released allowing the movable part of the brake and the pistons to rotate at the same angular velocity as the engine housing and shaft. When the pistons, cylinders, shaft and housings are rotating at the same angular velocity and in the same direction, the pistons are returned toward the cylinder head in a compression stroke by a coil spring that moves the pistons at an angular velocity greater than the engine housing and shaft.

In a preferred embodiment of the invention, the brake assembly for the piston includes a rotatable disc portion and a pair of brake pads or shoes. The disc portion is mounted for rotation with the pistons and shaft while the shoe portions are fixed relative to the supporting framework. The coil spring that returns the piston during a compression stroke is also adjustable to vary the return distance of the piston within the cylinder thus to vary the power and time required for the piston to complete a compression stroke and thus influences the compression ratio of the fuel-air mixture within the combustion chamber.

Since the piston is not mechanically connected to the rotatable shaft and its associated housing, suitable electronic controls are provided to initiate ignition within the cylinder. Accordingly, the piston can begin a power stroke at virtually any position relative to the cylinder head. The compression ratio of the air-fuel mixture is controlled by the distance the piston moves into the cylinder before ignition occurs. Timing mechanisms are provided to initiate ignition at the proper time depending upon speed, compression, load and the like. For example, the compression ratio can be increased by delaying the spark plug firing since the piston does not have to reach a top dead centre position and reverse directio as in conventional internal combustion engine. The ignition and firing position is determined by timing mechanisms and the like hereinafter described. A power stroke controller allows the compression ratio to be varied so that the engine always operates at maximum efficiency. When the engine is idling under no load condition, for example, the compression ratio is extremely low, while under load the compression ratio is increased.

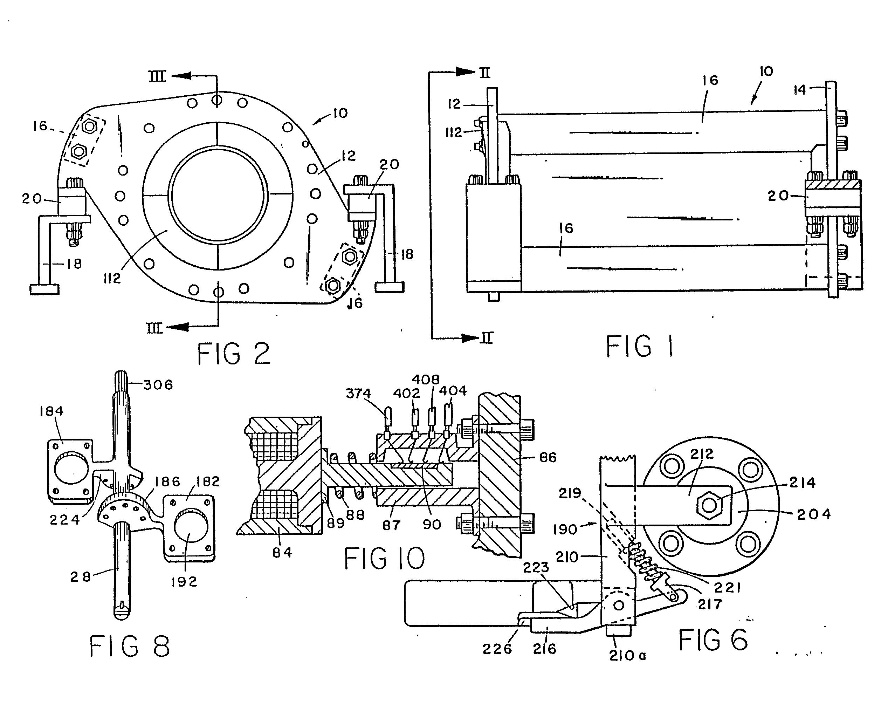

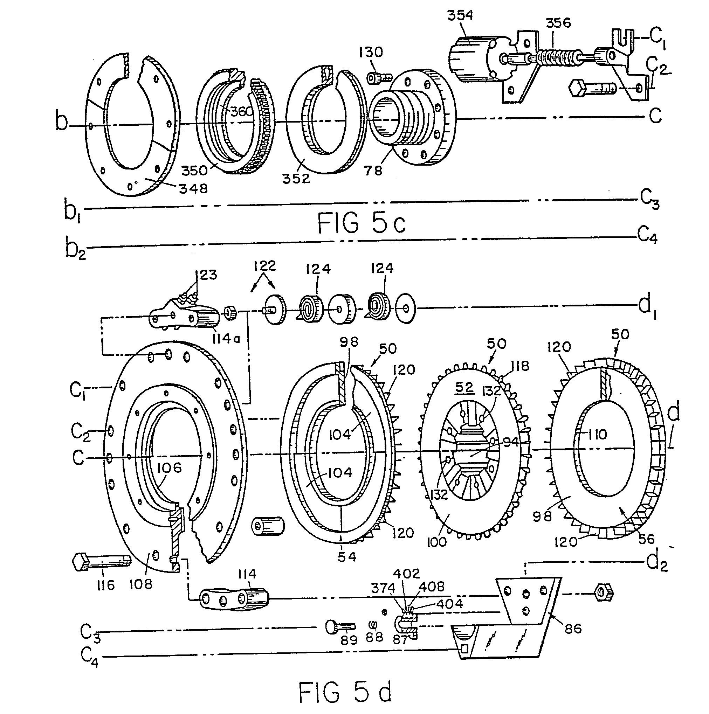

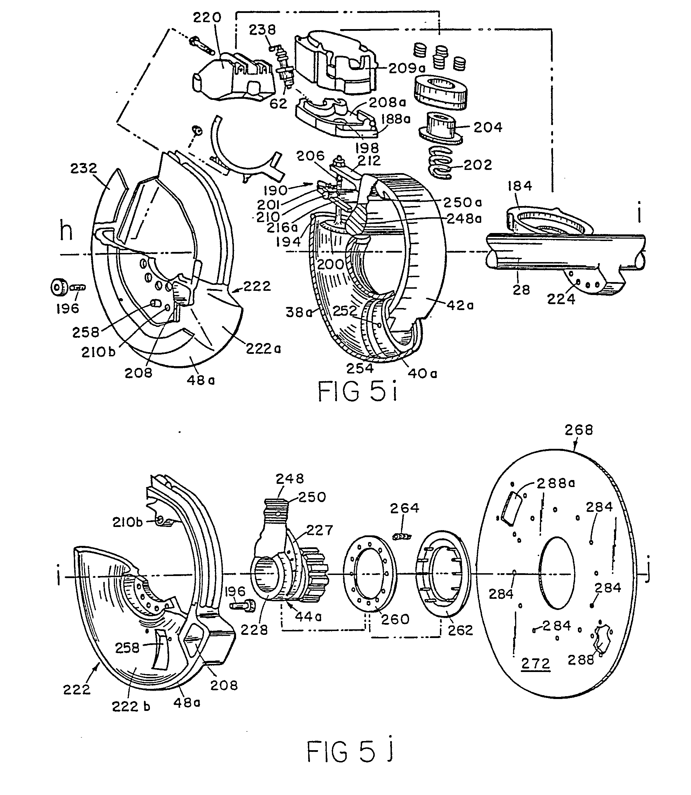

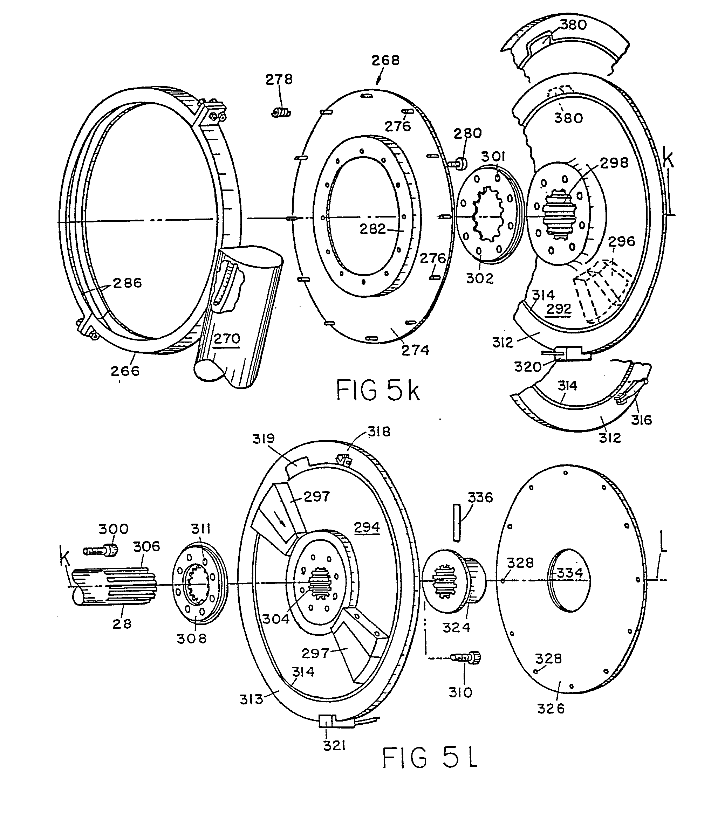

Referring now to the drawings and in particular to Figures 1, 2, 3 and 4, a rotary internal combustion engine is supported by operation in an engine support structure generally designated by the numeral 10. The engine support includes a front or left-hand support plate 12 and a rear or right-hand support plate 14. At least a pair of spacers 16 (Figures 5e and 5m) are fixed to and extend between the front and rear support plates to control the spacing therebetween. Engine mounting braces 18 (Figures 2) are provided to fix the engine assembly to the structure in which it is ultimately utilised. Preferably, vibration isolators 20 formed of hard rubber or similar material are secured between the engine mounting braces 18 and the associated front and rear support plates 12 and 14. Alternately, the engine may be enclosed between the supports 12 and 14 in a cylinder-like housing with appropriate openings for the carburetor, electrical leads, exhaust pipe, engine cooling air, and engine adjustment access.

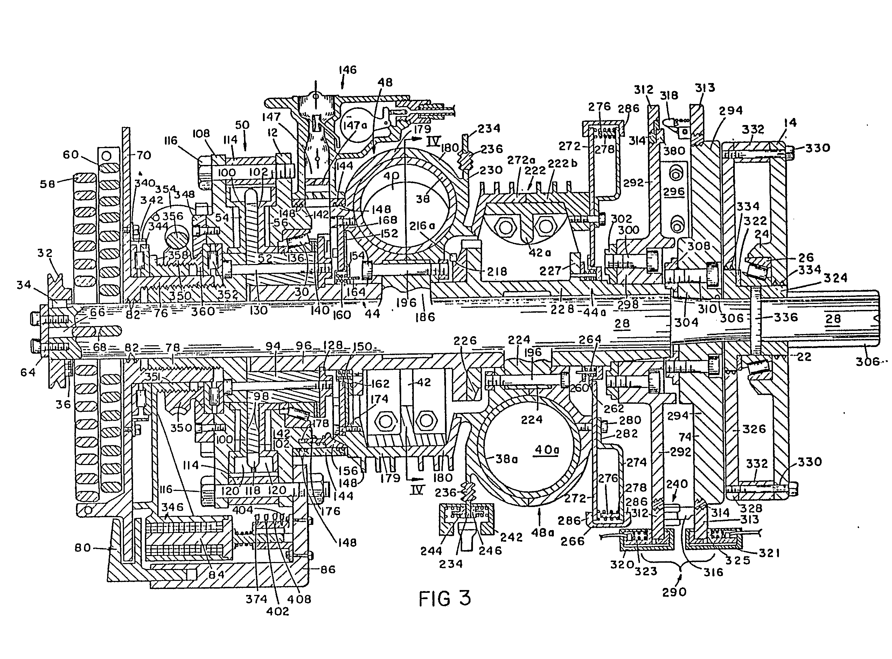

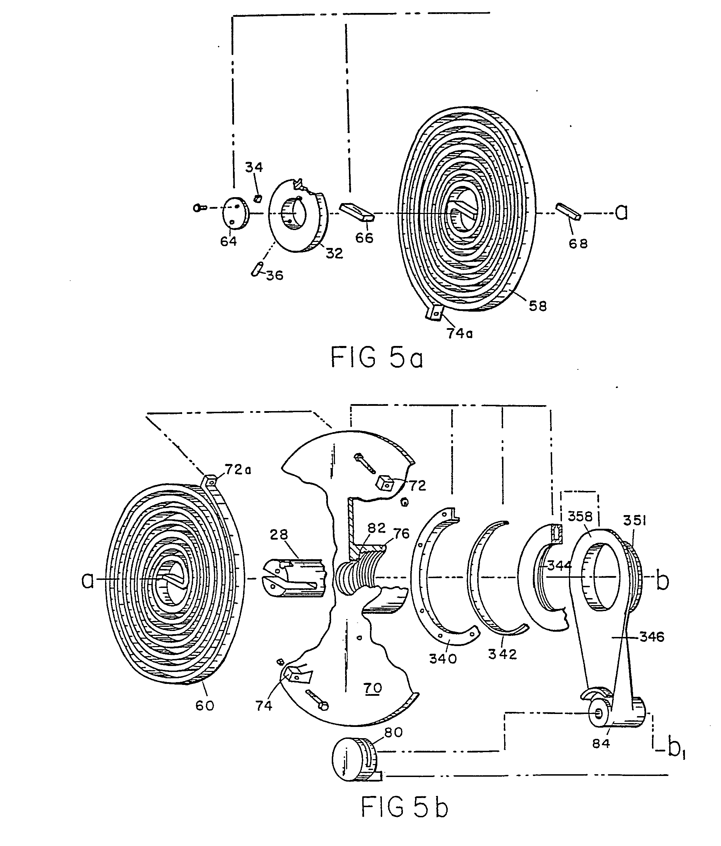

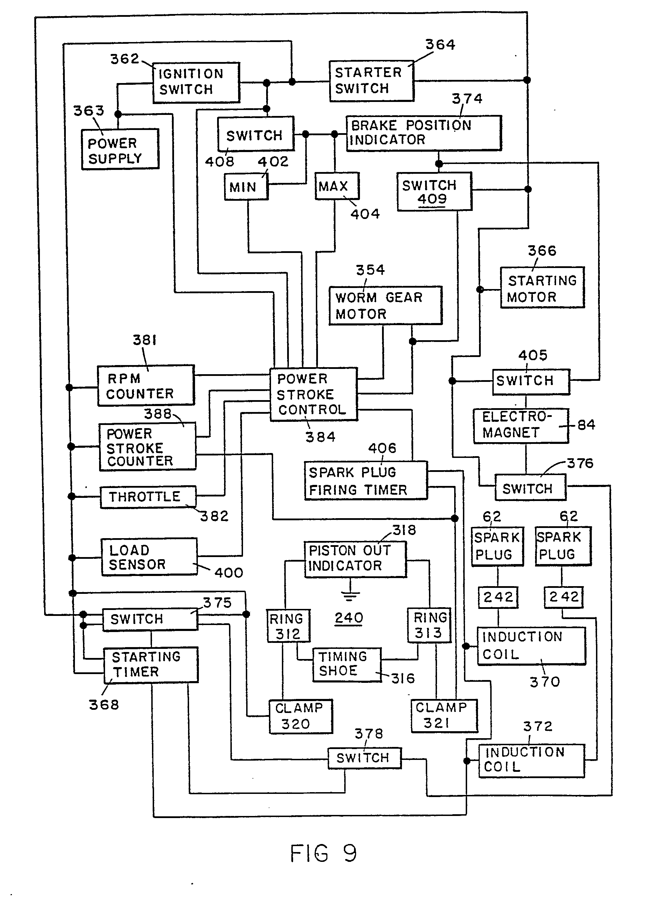

The rear support plate 14 has an opening 22 (to the right in Figure 3) formed through the central portion thereof (Figure 5m) surrounded on its left by an annular flange 24 which forms a housing to receive a tapered roller thrust bearing 26 in which one end of an engine shaft or axle 28 (see also Figures 3 and 8) is rotatably supported. The opposite end of shaft 28 extends through the front support plate 12 where it is mounted with other component parts for rotation with respect to the support structure on a second tapered roller thrust bearing 30. The front or output end of shaft 28 extends outwardly where a pulley 32 or other suitable power take-off mechanism is fixed. The pulley 32 is used to operate the engine accessories and is fixed to the axle by means of a key 34 and set screw 36 (see Figure 5a). The opposite end of shaft 28 is splined as indicated at 306 (Figs. 3, 5l and 8) for connection to a transmission (not shown) or similar mechanism to utilise the engine power output.

The engine embodiment illustrated includes two toroidal cylinders, each of which includes a piston and a connecting rod connected to a common torque sleeve. Similar components are, therefore, designated with similar reference numerals. The front or number one piston as viewed in Figures 3 and 5a—5m has the basic reference designation, i.e., 40, for the left piston, while those on the right having similar characteristics bear the same reference numeral with the suffix "A". It will also be understood that the present invention can utilise one, two or more cylinders depending upon the desired output characteristics of the engine. For simplicity and clarity, however, a two-cylinder model of the present invention is disclosed and illustrated in detail.

With additional reference to Figures 5a—5m, the internal combustion engine of the present invention basically includes two combustion chambers or cylinders 38, 38a extending circumferentially with respect to the shaft 28. The shaft 28 forms the axis of rotation for the engine within the supporting structure 10. The pistons 40, 40a are operable in the cylinders 38 and 38a to cause the cylinders and the associated engine housing to rotate about the axis of shaft 28. The cylinders and associated rotatable mechanisms to be hereinafter described, including the shaft 28, are mounted for rotation with respect to the front support plate 12 and the rear support plate 14.

The pistons are supported for movement in their respective cylinders with respect to the housing by connecting rods 42, 42a attached at one end to the piston 40, 40a and at the opposite end to a torque sleeve 44 which is rotatable about the shaft 28. The torque sleeve 44 is preferably formed as two parts 44 and 44a each fitting over either the left or right end of shaft 28. The two parts, shown as partial circles in Figure 5h when assembled together by bolts or welding, butt against flanges 186 and 224 on the shaft (Figure 3) to form a complete circle. The cylinders 38, 38a are retained in a housing generally designated by the reference numerals 48 and 48a (see Figures 5h and 5i). The piston is movable toward and away from the top of the cylinder with rotation of the housing between power and compression strokes. The cylinder housings 48 and 48a also contain fuel inlet and fuel exhaust passageways, to be discussed hereinafter, which are in communication with the combustion chambers, that is, the area formed in the cylinder above the top of the piston.

As shown to the left of the housing 48 in Figure 3, a brake assembly generally designated by the numeral 50 includes a disc brake 52 and a pair of shoes 54 and 56 operable to hold the pistons 40 and 40a with respect to the rotating structure during a power stroke to prevent retrograde movement of the pistons upon ignition to urge the cylinder housing structure to rotate about the axis of shaft 28.

To return the pistons toward top of the cylinders in a compression stroke, biasing means in the form of a pair of springs 58 and 60 are operatively connected to the housing and the pistons. The springs 58 and 60 bias the pistons in the same direction of movement as the cylinder housing to move the pistons into the cylinders while the cylinder structure and shaft are rotating with respect to the support framework.

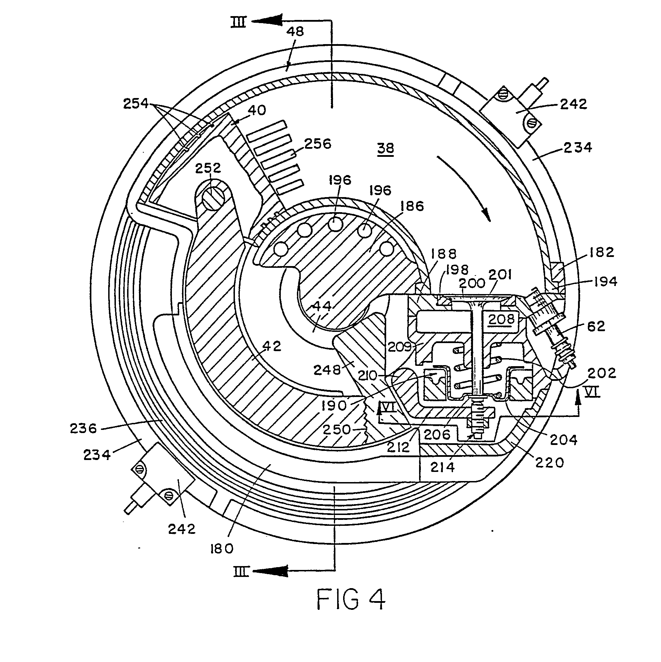

As shown in Figure 4, each cylinder 38 is equipped with a spark plug 62 to ignite the fuel mixture when a predetermined position of the pistons is reached during the compression stroke thereby to initiate a power stroke. Sensing means is provided to sense the position of the pistons with respect to the cylinder head and to release the brake assembly 50 allowing the pistons to rotate with the housing during the compression stroke as the springs 58 and 60 urge the pistons into the cylinders. Movement of the pistons is alternately retarded and accelerated relative to the movement of the cylinders 38, 38a. Since the cylinders 38 and 38a are fixed and rotate with the housing and axle, the angular movement of rotation of the housing with each power stroke transmits power to the output spline 306 at the right hand end of the shaft 28, and to the output pulley 32 fixed to the left end of the shaft 28. As mentioned previously, the output pulley may be connected in any conventional manner to drive accessories while the opposite end at the spline 306 may be directly coupled to suitable transmission means.

Referring to Figures 5a—5m, each of the operative components of the invention will be described briefly to thus illustrate the engine construction and to explain the operation thereof. In Figure 5a, for example, beginning at the left or output end of the engine (but also see Figure 3), a small circular end cap 64 is held in place in a conventional manner to the end of the shaft 28 and serves to retain a key 34 in the pulley 32 and also to hold a spring holder 66 against a bias spring 58. A spring spacer 68 maintains the correct spacing between the bias spring 58 and a second bias spring 60. The springs 58 and 60, as previously mentioned, are provided to force the pistons 40 into the cylinders 38 in a compression stroke. As will be described hereinafter, the spring tension is adjustable to vary the compression ratio of the engine and vary the angular velocity of the pistons during a compression stroke.

Reference numeral 70 in Figures 3 and 5b illustrates a spring disc having a pair of upstanding projections 72 and 74 to which the outer ends 72a and 74a of the springs 58 and 60 are secured, respectively, by nuts and bolts as illustrated. The spring disc reciprocates in a circular motion with movement of the pistons and is movable to the left and right along the axis of shaft 28 for adjustment. Spring tension is maximum when the disc is moved outwardly or to the left and minimum when it is moved inwardly or to the right. For this purpose the spring disc 70 has an internally threaded hub portion 76 mounted on a threaded mating brake hub 78 fixed to the disc brake 52. The co-operation between the spring disc hub 76 and the brake hub 78 serves to connect the spring 58 and 60 to the spring disc 70 and to the disc brake 52. A pair of sealing rings 82 are positioned on the inner opening of the spring disc 70 surrounding the shaft 28 to prevent leakage of the fuel-air mixture along the shaft.

Figure 3 (left hand side) and Figure 10 show a spring tension adjuster assembly 80 which is positioned to engage and hold the spring disc 70 to allow the springs to be wound and increase the spring compression when the engine is started as will be explained hereinafter.

The spring tension adjustment assembly 80 associated with spring disc 70 is operated by an electromagnet assembly 84 which is retained in a holder assembly 86. The electromagnet assembly 84 shown in greater detail in Figure 10 includes a holder assembly 86 which in turn is secured to the support 12 (Figure 3). The holder assembly 86 has a movable portion 80 to engage and prevent the spring disc 70 from turning. The holder assembly also cradles the electromagnet 84 and a coil spring tension adjustment mechanism 346 so that it does not rotate. It also holds a nonconductive electrical housing 87 in which a number of switching elements are contained as will be hereinafter described.

As shown in Figure 10, a spiral spring 88 is provided to keep a spring disc position indicator 89 against the electromagnet holder and spring tension adjustment mechanism 346. An electrical conductor plate 90 is set in the spring disc position indicator 89 to conduct current as will be hereinafter explained to the maximum, minimum and starting position switches.

The disc brake assembly 50 holds the pistons 40 and 40a and the associated torque sleeve during a power stroke of the engine thereby forcing the cylinders 38 and 38a and the axle 28 to which they are connected to rotate. The disc brake 52 is positioned between the brake shoes 54 and 56 and the disc brake 52 is provided with a splined central portion 94 (see Figure 5d) to receive a corresponding spline 96 on the torque sleeve 44 (Figure 5f).

The left hand brake shoe 54 and right hand brake shoe 56 are basically identical, each having a face surface 98 adapted frictionally to engage corresponding surfaces 100 and 102 (Figure 3) formed on the disc brake 52.

The side opposite the facing surfaces on each brake shoe 54 and 56 has a circular inclined plane or ramp surface machined thereon. As shown in Figure 5d the brake shoe 54 has a ramp surface 104 formed thereon adapted to engage with a corresponding ramp surface 106 formed on a brake support 108 (Figures 3 and 5d). The other brake shoe 56 is similarly equipped with a circular inclined plane or ramp surface 110 adapted to engage with a corresponding ramp surface 112 (see Figure 5e) machined on the side of the front support plate 12.

The brake support 108 and front support plate 12 are fixed to each other and spaced apart by spacers 114 and 114a (see Figure 5d). Screws 116 or other suitable fastening means secure the brake support 108 to the front engine support 12 to form the brake assembly 50. The disc brake 52 is designed to be as friction-free as possible when the brake is rotating with rotation of the engine. Air fins 118 around the outside diameter of disc brake 52 force air into corresponding air vanes 120 formed around the outer diameter of brake shoes 54 and 56. In addition to the cooling function, the air fins tend to push the shoes away from the disc brake during engine rotation.

One of the spacers, 114a, positioned between the brake support 108 and front support plate 12 also carries suitable brake shoe adjustment mechanisms 122 including a pair of springs 124. The adjustment mechanism 122 includes a pair of screws 123 threaded into the support spacer 114a to prevent the brake shoes 54 and 56 from being pushed too far away from the disc brake 52 by the force of air from the rotating disc brake against the brake shoes. The end of the screw rests against one of the air vanes 120 on the brake shoe. The springs 124 are wound, when installed, to push the brake shoes 54 and 56 in the direction opposite engine rotation. Upon ignition, when the pistons attempt to reverse direction, the springs 124 urge the brake shoes 54 and 56 against the disc brake 52 to ensure surface contact. Once the shoes 54 and 56 establish a contact with disc brake 52 and slight rotation of the sleeve 44 occurs, there is caused a wedging action and self-tightening effect on the circular inclined ramps 104, 106 and 110 and 112 to urge the facing friction surfaces 98, 100 and 102 of the shoes and brake into tight engagement. When the brake is thus engaged, the pistons are held against movement and while ignition occurs, the cylinder assembly rotates with the engine structure.

The spline portion 96 of the left torque sleeve 44 (Figure 5f) engages the corresponding spline 94 formed in the centre of the disc brake 52. The torque sleeve 44 is fixed to the disc brake by a spline holder 128 and screws 130 (Figures 5c and 5e). The screws 130 extend through the openings in the flange of the brake hub 78 (Figure 5c), through openings 132 in the disc brake (Figure 5d), and are received in tapped openings 134 formed in the spline holder 128 (Figure 5e). The screws 130 and the spline holder 128 also position a seal 136 which prevents escape of the fuel air mixture, the tapered roller thrust bearing 30 which supports the engine for rotation in the front support plate 12, and a wave washer 140. The wave washer 140 keeps constant force on the thrust bearing 30 to retain its position in the front support plate. The thrust bearing 30 is supported in the machined inner diameter of a flange 142 (Figure 5e) formed on the inner facing surface of the front support plate 12. The outer diameter of the flange 142 is also machined to provide an annular surface upon which is mounted a carburetor holding ring 144 (Figure 5f).

The carburetor holding ring 144 is fixed relative to engine rotation and supports a carburetor 146 (Figure 5f). The carburetor is of conventional construction and accordingly will not be described in greater detail. An air fuel mixing chamber 147 is located at the base of the carburetor 146 and helps to mix the fuel with the air just before it enters the interior of the engine. The mixer has a plurality of small wedge-shaped knives 147a arranged in two oppositely-inclined layers (Figures 3 and 5f) that divide the mixture flow and compress it between adjacent wedge-shaped blades. When the mixture leaves one layer, it expands, and the flow is divided by the sharp edges of the wedges in the next layer, and is shifted 90° in direction. The 90° turns help to prevent fuel streaks and the compression-expansion action is to help mix the fuel with the air. The mixing chamber is designed to mix the air and fuel with a minimum of resistance to the mixture flow. Suitable sealing elements 148 are positioned around the flange 142 and the inner diameter of the carburetor holding ring 144 to prevent leakage of the fuel air mixture.

The carburetor holding ring 144 is associated with a first fuel valve disc 150 (Figures 3 and 5f) fixed to the engine housing, a second fuel valve disc 152 fixed to the torque sleeve 44, a holding disc 154, a self-tightening seal ring 156 and a plurality of bias springs 158 (positioned between the support 12 or flange 142 and the seal ring 156) and springs 160. These elements co-operatively form the fuel air mixing chamber and the fuel inlet manifold for the engine.

As shown in Figures 3 and 5f, the holding disc 154 abuts a radial surface 162 formed on the torque sleeve 44 and is held with respect thereto by a plurality of pins 164 extending outwardly from the central portion of the second fuel valve disc 152. A plurality of springs 160 are positioned over the pins 164 and abut holding disc 154. The springs 160 bias the fuel valve disc 152 against the first fuel valve disc 150 fixed to the housing. The fuel valve discs 150 and 152 co-operatively operate to seal the air-fuel mixture during a power stroke of the engine.

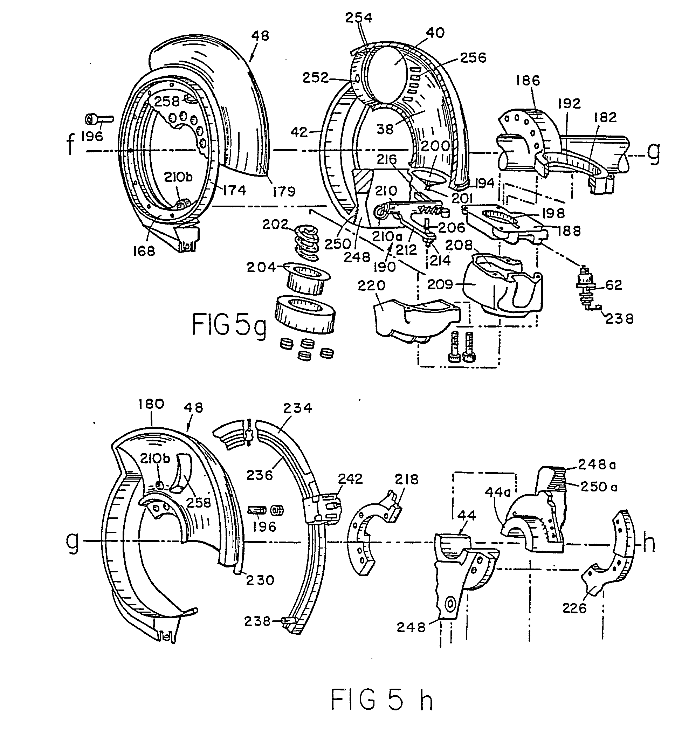

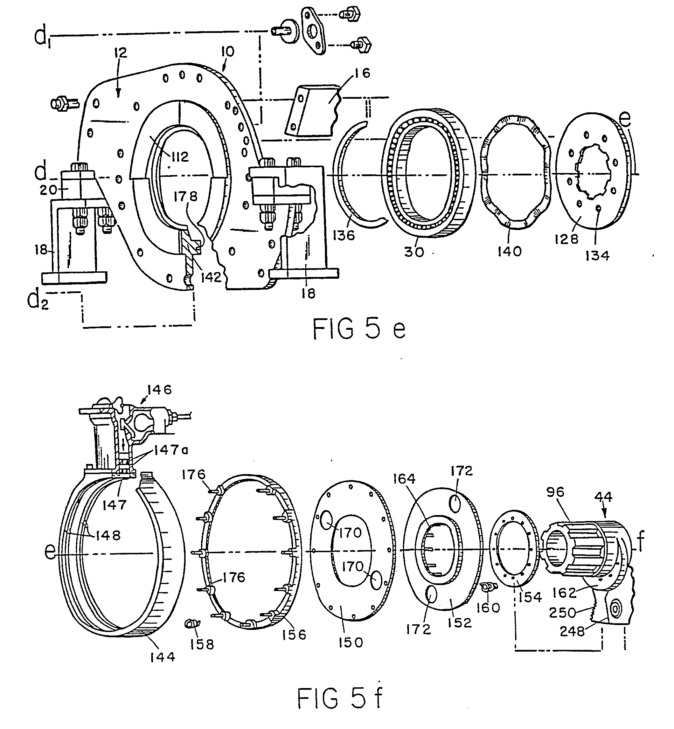

The first fuel valve disc 150 is fixed to a side portion 168 of the cylinder housing 48 (Figures 3 and 5g). The disc 150 (Figure 5f) has two openings 170 formed therethrough positioned 180° apart. The second or torque sleeve fuel valve disc 152 is fixed to the torque sleeve 44 by the pins 164 passing into openings formed in a radial surface 162 on the torque sleeve 44. The springs 160 bias the disc 152 against the disc 150. The disc 152 is similarly provided with two openings 172 positioned 180° apart that are in alignment with the openings 170 in the disc 150 when the pistons are near the end of a compression stroke. When the openings 170 and 172 in the disc 150 and 152 are in alignment, the air-fuel mixture is forced into the engine housing below the pistons by the partial vacuum created by piston movement. The surface between the discs 150 and 152 is lubricated by the air-fuel mixture.

An annular sealing flange 174 (Figures 3 and 5g) formed adjacent the side portion 168 of engine housing 48 is adapted to seal against the inner diameter of the self-tightening seal ring 156 (Figure 5f). The seal ring 156 has a plurality of outwardly extending pins 176 formed thereon which are received in corresponding pin-receiving openings 178 (Figure 3) formed in the inner facing surface of the flange 142 on the front support plate 12. Springs 158 are positioned over the pins 176 between the flange 142 and the seal ring 156 to bias the seal ring into sealing engagement with a sealing flange 174 on the engine housing. The pins 176 also prevent the seal ring from rotating and fix the seal ring with respect to the front support plate 12.

With reference to Figures 3, 4 and 5g—5j, the piston, cylinder and the cylinder housing will now be described in somewhat greater detail. As mentioned earlier, each piston 40 is mounted for movement in a cylinder 38. The cylinder 38 is formed as an arcuate sleeve positioned and held in the cylinder housing 48. The number one, or front cylinder housing, includes two portions, a first or left side housing portion 179 (Figures 3 and 5g) having the previously mentioned side portion 168 and flange 174 formed thereon to seal against the self-tightening seal ring 156 and a second or right side housing portion 180 (Figures 3 and 5h). The housing portions 179 and 180 are generally arcuate in configuration and are adapted to be fixed together to engage and hold the cylinder 38. The housing portions 179 and 180 are fixed to the shaft 28 for rotation therewith. The engine housing surrounds the working parts of the engine, provides a leakproof chamber for the air-fuel mixture and dissipates the heat generated in the cylinders.

Referring briefly to Figure 8, the engine shaft 28 is an elongated shaft having a pair of oppositely directed outwardly extending paddles which form housing retainers 182 and 184. The engine housing 48 is fixed to the housing retainers. The housing retainer 182 extends outwardly from a flange 186 and is adapted to hold the housing portions 179 and 180, the cylinder 38 a cylinder head 188 and an exhaust valve assembly 190 (Figure 4). The housing retainer 182 has an opening 192 formed therethrough which forms a lip or channel adapted to mate with a corresponding outwardly extending end portion or flange 194 on the cylinder 38. As illustrated in Figures 3 and 4, the flange 186 formed on the shaft 28 has a series of bolt holes or openings therein to receive bolts 196 by which the housing parts 179 and 180 are secured together to enclose the cylinder and to fix the housing assembly to the shaft 28.

The cylinder head 188 is secured to the housing retainer 182 to form the top or closed end of the combustion chamber. The spark plug 62 is threaded in the cylinder head 188 and extends into the combustion chamber in a conventional manner. The cylinder head 188 has a valve seat 198 formed therein against which the head of an exhaust valve 200 is seated.

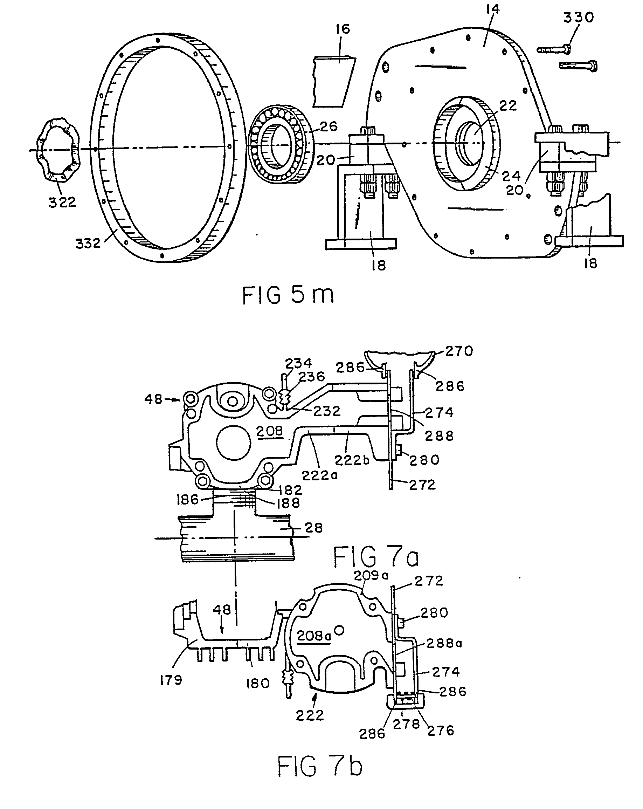

The exhaust valve assembly 190 includes the exhaust valve 200 having a stem 201 which passes through the cylinder head 188 and a manifold header 209 where it is held in position by a conventional valve spring 202, a holding cup 204 and a valve spring keeper 206. The keeper fits in a groove around the valve stem 201 and retains the valve spring and holding cup on the valve stem. An exhaust chamber or port 208 is located directly below the valve 200 and the valve seat 198 in the exhaust manifold header 209. A tappet 210 (see also Figure 6) is pivotally mounted and has an outwardly extending arm portion 212 into which an adjusting screw and lock assembly 214 is positioned to abut the lower end of the valve stem 201 to ajust the valve lash. The tappet 210 is held in place by end portions 210a which extend into suitable openings 210b (Figures 5g, 5h, 5i and 5j) in the cylinder housing. The tappet transmits the movement of a cam follower 216 to open and close the exhaust valve 200. A cam follower 216a engages a cam surface 218 formed on the torque sleeve 44 (see Figure 3). A cam follower push rod 217 (Figure 6) is fixed at one end on the cam follower 216 while the opposite end extends into and is guided by an opening 219 in the tappet 210. A spring 221 encircles the push rod 217 and biases the cam follower 216 against the cam surface 226. As the torque sleeve 44 rotates with movement of the piston 40, movement of the cam follower 216 on the cam surface 226 causes the valve 200 to open and close at the prescribed time. The exhaust valve assembly 190 is closed by a removable cover member 220 (Figure 5i). In operation, the exhaust valve assembly operates to open and close the valve in a manner conventional to two stroke cycle engines.

The rear of number two cylinder housing 222 includes two portions, a left side housing 222a and a right side portion 222b. (Figures 5i and 5j) which are fixed together and to the shaft 28 and the retainer 184 and 224 in the same manner as that previously described in connection with the front or number one cylinder assembly. Like components including the cylinder head, exhaust valve assembly, exhaust manifold, pistons and cylinders are accordingly designated with like reference numerals.

The cylinder housings 48 and 222 are fixed together and positioned such that the head portion of the cylinder 222 is fixed to the retainer 184 on the shaft 28 and is positioned 180° from the head or top of the cylinder 48. As shown in Figure 3, the rear cylinder housing 222 is similarly fixed to the shaft 28 by bolts 196 received in bolt hole openings provided in a flange 224 on the shaft 28. The flange 224 corresponds to the flange 186.

The cam follower 216a of the exhaust valve assembly 190 is adapted to engage a cam surface 218 formed on the right hand side 228 of the torque sleeve 44. The cam follower 216a forces the tappet 210 to open and close the exhaust valve 200. The cam surface 218 formed on the torque sleeve is part of a disc welded or otherwise fixed to the torque sleeve and serves additionally to strengthen and reinforce the torque arm.

The cam follower 216 is held by the tappet 210 and rotates with the engine housing to follow the contour of the cam. As the piston moves toward the end of the power stroke, the follower moves up an incline on the cam surface to open the exhaust valve. Simultaneously, while the cam follower is operating to open the valve, the follower is moved sideways by a second surface 223 formed on the cam surface (see Figure 6) nearly perpendicular to the shaft axis. The second surface 223 pushes the cam follower off the first surface, the follower slides down a ramp and the exhaust valve closes.

As shown in Figure 5i, the rear cylinder housing 222 includes a semi-circular outwardly extending flange 232 on its left side portion 222a and the front cylinder housing 48 includes a similar raised outwardly extending flange 230 on its right side portion 180. When the cylinder housings 48 and 222 are fixed together, the outwardly extending flanges 230 and 232 form a continuous annular ring around the cylinder housings 48 and 222 to provide a mounting surface for a high voltage conducting ring 234. The conducting ring 234 connects a fixed high voltage power supply i.e., an ignition coil 370 and 372 (Figure 9) to the spark plugs 62. The conducting ring 234 is electrically isolated from the cylinder housings 48 and 222 by a nonconductive insulating ring 236. The conducting ring 234 is electrically connected to each spark plug 62 by a wire 238 (Figure 5g). Current from the high voltage source and a timing mechanism 240 (Figure 3) is conducted to the ring 234 through a brush block assembly 242 which include a pair of brushes 244 and 246 engaging opposite sides of the conducting ring 234.

As best illustrated in Figures 4, 5f, 5h and 5j, the torque sleeve 44 inludes an outwardly extending torque arm 248. Torque arm 248 has a serrated or ribbed surface 250 mating with a corresponding surface on the lower end of the piston connecting rod 42. The connecting rods 42 are generally T-shaped in cross section for strength and rigidity. The serrated end of the connecting rod 42 is bolted to the torque arm 248 while its opposite end is connected to the piston by a wrist pin 252. The piston 40 is slightly curved along its length to correspond to the curvature of the cylinder 38 in which it is movable. A seal between the cylinder walls and piston is provided in the conventional manner by piston rings 254.

Each cylinder is equipped with air-fuel mixture inlet slots 256 machined through the cylinder wall. The slots 256 admit the air-fuel mixture when the slots are exposed by the piston at the end of its power stroke. The cylinder housings 48 and 222 have a corresponding relief 258 (Figures 5i and 5j) machined in their inner facing surfaces for passage of the fuel air mixture through the slots and into the combustion chambers from within the area defined by the assembled cylinder housings.

The support rib 227 (Figure 3) of right hand side 228 of torque sleeve 44 receives a fuel mixture holding disc 260 (Figure 5j) and a seal member 262 including springs 264 similar to the previously described holding disc 154, seal ring 152 and bias springs 160. The discs and seals 154, 152 and 260, 262 prevent loss of the fuel air mixture from within the engine cylinder housing.

The exhaust manifold (see Figures 5j, 5k and 7) includes a fixed annular portion 266 and a rotatable portion 268. The fixed exhaust manifold portion 266 is in the form of a ring, remains stationary, and is held in place with support members attached to the engine mounting structure. An engine exhaust pipe 270 is fixed to the ring 266 and may be connected to conventional exhaust muffling devices. The rotatable portion 268 of the exhaust manifold includes a pair of discs 272 (Figure 5j) and 274 (Figure 5k). The disc 274 is provided with a series of axially extending pin members 276 which receive springs 278 to abut against the inner facing surface of the disc 272. A raised central portion 282 of the disc 274 has openings therethrough in alignment with corresponding openings 284 in the disc 272 to receive screws 280 (Figure 5k) by which the two discs 272 and 274 are fixed to the cylinder housing. The springs 278 bias the outer edges of discs 272 and 274 apart and into engagement with corresponding sidewalls 286 formed on the fixed portion 266. Openings 288 and 288a through disc 272 communicate with the exhaust manifold header 209 and 209a from the exhaust ports 208 and 208a. As shown in Figures 7a and 7b, it will be noted that the exhaust passageways from the cylinder housing 48 extend also through a passageway 208 formed in the cylinder housing 222 behind the piston and cylinder where it is connected to communicate with opening 288 in the disc 272. The exhaust chamber 208a passes directly from the cylinder housing 222 and is in communication with opening 288a in disc 272.

A shock absorber assembly generally designated by the numeral 290 (Figures 3, 5k and 5l) comprises two shock plates 292 and 294. Four resilient pads 296 and 297 provide the cushioning mechanism for the shock absorbers. Two resilient pads are mounted on each plate 292 and 294. The left side shock plate 292 (Figure 5k) has a splined central hub portion 298 by which it is mounted on the right hand part 228 of the torque sleeve 44a. The shock plate 292 carries a pair of oppositely directed pads 296 (one is shown in phantom in Figure 5k). The plate 292 is fixed to the torque sleeve 44 by screws 300 passing through openings in the central hub portion and into threaded openings 301 in a spline holder 302 (Figures 3 and 5k).

The right hand shock plate 294 similarly carries a pair of resilient pads 297 oppositely directed and adapted to cushion and engage the resilient pads 296 on the plate 292. The plate 294 (Figure 5l) also has a splined central portion 304 adapted to match with the spline 306 formed near the end of shaft 28. The plate 294 is secured to shaft 28 by a spline holder 308 and screws 310 received in threaded openings 311 in the spline holder. The shock plate 294 has an axial thickness greater than that of shock plate 292. The greater mass rotating with the engine and shaft 28 provides also the function of a flywheel to dampen vibrations caused by the rotating parts and to provide sufficient inertia to continue rotation of the engine after each power stroke. At the end of a power stroke, the resilient pad members 296 and 297 give a bounce effect to the stationary plate member after the full impact force is absorbed and the pistons start another compression stroke. The bounce effect contributes to the force needed to return the pistons during the compression stroke.

The shock plates 292 and 294 each also carry low voltage conducting rings 312 and 313, respectively, separated from the metallic portion of the shock plates by an insulator 314. The low voltage electrical conducting rings provide a continuous method of electrical contact for the reciprocating parts and the rotating parts to signal a timer 406 to fire the spark plugs when the piston is at the proper position in the cylinder for a power stroke. The conducting ring around the left side shock plate 292 holds a timing shoe 316 (Figure 5k). The timing shoe 316 contacts the conducting ring 313, sliding as the engine runs. The conducting ring 313 around the right hand shock plate 294 holds a piston out indicator switch 318 (Figures 3 and 5l) to indicate the position of the piston.

The indicator switch 318 is mounted on the conducting ring 313. In operation, the switch 318 signals the engine starting system that the piston is retracted and the starting brake can be released. An earthing pad 380 (Figures 3 and 5k) is a small wedge-shaped pad and extends from the surface of the left shock plate 292. The earthing pad contacts the indicator switch 318 that slides up its inclined surface as the piston is retracted. When the piston is retracted, the switch 318 shorts out the electrical current supplied through the pad 380 and conducting clamp 320 to earth. The timing shoe 316 passes the electrical current from the conducting ring 312 to conducting ring 313. While the engine is operating, centrifugal force prevents the switch from contacting the left shock plate 292.

The timing shoe 316 is held by the conducting ring 312 around disc 292 and slides on the opposite conducting ring 313 or at certain times on an insulated portion 319 of the conducting ring surface. While the timing shoe is in contact with the conducting ring 313, the piston is not in a proper position to start a power stroke. When the piston is in its proper position, the timing shoe slides over the insulated portion 319 breaking the current flow providing a signal to fire the spark plug. Low voltage electrical conducting clamps 320 and 321 include spring loaded, conductive brushes 323 and 325 which engage the conducting rings 312 and 313 to pick up electrical signals from the timing shoe 316 as will be described hereinafter in connection with the description of the electrical system of the invention.

As mentioned previously the tapered thrust bearing 26 is mounted within a flange 24 formed in the rear support plate 14 (see Figure 5m). The thrust bearing is retained in place by a wave washer 322 and a support sleeve 324. A tapered pin 336 secures the support sleeve 324 to the shaft 28. The support sleeve 324 has a splined central portion to fit over the shaft 28 and provides a smooth circular surface for O-ring seals 334 and a supporting surface for the inner race of thrust bearing 26.

A side plate 326 (Figure 5l) is positioned in spaced relationship with respect to the rear support plate 14 by an annular spacer 332 (Figure 5m). Screws 330, passing through the rear support plate 14 and spacer 332, are received in threaded openings 328 formed in the side plate 326. The side plate 326 forms one side of the tapered thrust bearing container. The container protects the bearing from dirt and other contamination and also serves as a reservoir for grease for lubrication of the bearing.

Referring back to Figures 3, 5a, 5b and 5c, it will be recalled that spring disc 70, which retains the outer end of springs 58 and 60, is movable in and out along the axis of axle 28 to vary the spring tension. Spring tension adjuster 80, operated by electromagnet assembly 84, locks against the edge of spring disc 70 and prevents the spring disc from rotating when the engine is started.

The hub 76 of the spring disc is operatively connected to transmit power from the spring holder disc 70 to the hub 78 connected to the disc brake 52. A worm wheel 350 (Figures 3 and 5c) having a threaded central portion is threaded on the outer diameter of a hub 351 of the electromagnet and tension adjuster holder 346. The inner diameter of hub 351 is slidably received on the hub 76 of the spring disc 70. A bearing 344 is positioned between a flange 358, formed around the hub 351 on the holders 346, and the back surface of the spring holder disc 70. A seal ring 342 retained by a holder 340 prevents the lubricant from leaking from bearing 344. The worm wheel 350 has also a radially inwardly facing annular flange 360 formed on one side which abuts against a thrust bearing 352 positioned between the worm wheel 350 and the hub 78. The bearing 352 contacts only the hub 78 and the worm wheel 350. A holder ring 348 is bolted to the brake support 108 to hold the worm wheel in position yet allows it to rotate with respect to brake support 108.

A worm gear 356 (Figures 3 and 5c) drives worm wheel 350 by means of an electric motor 354 which is secured to the brake support 108 and is selectively operable in either direction to rotate the worm gear 356 and to rotate the worm wheel 350. The worm wheel 350, when rotated by the motor 354, causes the holder 346 and the associated spring tension adjustment mechanisms to move along the axis of the shaft 28, forcing the spring disc and the springs associated therewith to move in or out along the shaft and causing the spring disc 70 to rotate relative to hub 78 thus to vary the tension on the springs 58 and 60.

Electrical Circuit and Engine Operation

Having disclosed the mechanical components of the engine, reference may now be had to Figure 9 wherein the electrical circuits for the engine are disclosed in schematic form.

The ignition switch 362 supplies power from the power source e.g., a battery 363 to all of the operating systems including a power supply switch 408 and a starter motor 366 through a starting switch 364. Current is also supplied through a power supply switch 408 to operate the various sensing devices associated with the brake position indicator switch 374 and the maximum and minimum spring tension indicator switches 402 and 404. When the ignition switch 362 is closed, the engine can be started by operation of the starter switch 364. When the starter switch 364 is closed, the electromagnet 84 is energised, moving the spring tension adjuster 80 (Figure 3) into engagement with the edge of spring disc 70 to hold the spring disc from rotation. The starting motor 366 then rotates the engine and at the same time the worm gear motor 354 rotates the worm gear and associated worm wheel 350. The starting timer 368 is energised and supplies current to induction coils 370 and 372. As the engine is rotated by the starting motor, the bias springs 58 and 60 on the spring disc 70 are tightened and the pistons 40 are pulled outwardly with respect to their cylinder heads 188. As the springs 58 and 60 are tightened, the spring disc 70 moves along the axis of the shaft 28 with rotation of the worm gear 356 and the worm wheel 350. The spring disc 70 and the electromagnet and tension adjustment holder 346 associated therewith move along the axis of the shaft. When the coil springs are wound sufficiently to start the engine, the brake position indicator 374 provides a signal to relay switches 405 and 409 to turn the worm gear motor 354 off and releases the electromagnet 84 thus releasing the spring tension adjuster 80. When the spring tension adjuster is released, the spring disc 70 will move inwardly along the axis of shaft 28 until it is stopped by the hub 358 on holder 346 compressing bearings 344 and 352 while simultaneously the torque arm 44 is rotated forcing the pistons into the cylinder on a compression stroke.

Before the tension adjuster 80 releases, the bias springs 58 and 60 must, of course, be wound sufficiently and the pistons must be located near the bottoms of the cylinders. This position of the pistons is detected by the piston out indicator switch 318. When the switch 318 closes, the relay switch 375 detects the current flow and signals the starting timer 368 that the piston is out. Simultaneously, a signal is applied to the relay switch 376 causing it to open and disconnect the current applied to the electromagnet 84 releasing the spring disc 70 if the bias springs 58 and 60 are tensioned. Once the switch 375 signals the timer 368 that the piston is in position, the timer signals the relay 378 to keep the line to the electromagnet 84 or relay 376 open. The starting timer 368 also supplies current to the coils 370 and 372 when the starting switch is closed until the piston has started into the cylinder because the piston out indicator switch 318 earths the timing circuit. The earthing of the timing circuit in effect cuts current flow to the coils 370 and 372 causing the spark plugs 62 to fire. The piston out indicator switch 318 has sufficient resistance to prevent damage to the circuit when it touches the earthing pad 380 (Figures 3 and 5k).

As the spring disc 70 is released, the piston out switch 318 opens and the switch 375 conducts only if the start switch 364 is closed. When the piston out indicator switch 318 opens, a signal is provided by the switch 375 to the starting timer 368 to shut off current to the coils 370 and 372 after a short period of time allowing the timing mechanism 240 to function. If the starting timer 368 does not receive pulses from the coils 370 and 372 indicating that the spark plugs are firing, the starting timer 368 signals the relay 378 which in turn signals the switch 376 to actuate the electromagnet 84 to hold spring disc 70. The starting sequence repeats to again operate and withdraws the pistons for another compression stroke. For the starting timer 368 to repeat the starting sequence, the starting switch 364 must be closed.

Once the engine is started, the speed and power are regulated by a number of sensing and control devices. The operator of the engine determines engine speed or revolutions per minute with a throttle controller 382 which in turn is connected to the carburetor 146. When the throttle controller is set, the curburetor 146 automatically mixes the proper ratio of fuel and air. Since the piston is returned into the cylinder by the springs 58 and 60, the number of engine revolutions per piston power stroke can vary depending upon the load and the revolutions per minute of the engine. If, for example, the engine is idling at low revolutions per minute and with no engine load, the engine could revolve, for example, three times for every power stroke. As the load on the engine is increased, the revolutions per power stroke ratio can be decreased to, for example, one revolution per power stroke.

The engine sensing and control devices function together to operate the engine at maximum efficiency under any given load. This is primarily by the power stroke controller 384 which provides current to the electric motor 354 which operates the worm wheel to vary the tension on the springs 58 and 60. The controller 384 operates the motor 354 in either forward or reverse direction to increase or decrease the spring tension. To regulate the spring tension, the controller receives signals that are processed into engine requirements from various sensing devices including the revolutions counter 381, a power stroke counter 388, the throttle controller 382 and a load sensor 400. The contoller 384 also receives signals from an electrical contact 402 indicating that springs 58 and 60 are at minimum tension and by a similar electrical contact 404 indicating that the springs are at maximum tension. A signal from either contact 402 or 404 stops the operation of the worm gear motor 354 to keep the coil springs within their working limits. Any detected change the load or throttle setting will immediately cause the controller to change the spring tension a small or large amount depending upon the degree of change detected by the sensors.

It will be noted that the pistons are not mechanically linked to the rotating shaft 28 or its associated members in a manner that would control the number of engine revolutions per power stroke. This accordingly, allows the pistons to begin a power stroke at virtually any position relative to the cylinder or spark plug. The compression ratio of the fuel air mixture is controlled by the distance that the piston moves into the cylinders towards the cylinder head during the compression stroke and before the spart plug 62 fires. The timing mechanism 240 signals the spark plugs to fire when it breaks contact with the electrical conducting ring 313 by sliding over the non-conducting area 319 (Figure 51) of the insulating ring 314. This mechanical relationship provides the lowest compression ratio although the compression ratio can be increased by delaying the spark plug firing. This delay is developed by the spark plug firing timer 406. The longer the time lag, the higher the compression ratio. The length of the time lag or compression ratio required is determined and controlled by the power stroke controller 384. The controller varies the compression ratio so that the engine always operates at maximum efficiency. When idling, the compression ratio may be low, for example, 8:1. Under normal operation under load, the compression ratio may be considerably higher as, for example, 10:1 or 12:1. When the ignition switch is opened, the engine, of course, is shut off, then the power stroke controller 384 causes the worm gear motor 354 to operate, automatically reducing coil spring tension and the fuel supply is cut off.

The advantages of the present engine will be appreciated by those skilled in the art. The engine has, for example, a comparatively higher thermal efficiency. Because the engine is air cooled, the engine can operate at a high temperature (i.e., the materials around the combustion chamber can be hotter than if water cooled). The higher the operating temperature of the engine, the greater its efficiency. The piston moves with very little friction allowing the surfaces of the combustion chamber and piston to operate at very high temperatures. The combustion chamber is of optimum design so that the air-fuel mixture is more completely burned. The higher the temperature of combustion, the more likely nitrogen oxides (a polutant) will be formed. The combustion process is a function of time, pressure (volume), and temperature. This engine can operate at very high temperatures because the combustion chamber volume increases so rapidly (as compared with the regular piston engine) that the peak temperatures and pressures necessary for nitrogen oxides to form are rarely reached. The rapidly increasing volume of the combustion chamber also allows the engine to operate at a very high compression ratio or as determined by the power stroke control to maximise the engine's efficiency.

The provision of a variable compression ratio as opposed to an engine with a fixed compression ratio increases engine efficiency by allowing the engine to run at the optimum compression ratio taking into consideration engine load, speed and other operating conditions.

Pollution is minimised as the combustion chamber is designed to minimise the amount of cool surface area the burning gas comes in contact with, thus ensuring complete combustion and a very low level of unburned hydro-carbons being released into the atmosphere. The amount of oil (mixed with the fuel) required to lubricate the engine is very small because of the almost frictionless design of the working parts. When the air-fuel mixture is ignited, the oil burns along with the fuel. When the exhaust valve opens, the products of complete combustion will leave the combustion chamber. Any unburned or incompletely burned products will remain near the piston and along the cylinder walls. The conventional four stroke piston engine scrapes the hydro-carbons off the cool cylinder walls and ejects hydro-carbon material from the space between the piston and cylinder into the exhaust (after the power stroke) on the exhaust stroke.

The fresh air-fuel mixture entering the combustion chamber will not escape through the exhaust port because the exhaust valve opens and closes before the incoming gas reaches the cylinder head.

The engine design delivers torque to a rotating shaft in the most efficient manner possible. The force of the expanding gas is applied perpendicular to an arm or piston extending from the axle forcing it to turn.

The engine develops a tremendous amount of torque and when loaded down has a great lugging power. When the burning gas forces the piston to the end of the power stroke, the coil spring will return the piston into the cylinder automatically.

Compared to other internal combustion engines, the radial torque engine has higher thermal efficiency, lower level of pollution, higher horsepower to weight ratio, higher torque and less friction.

To summarise the invention in view of the above disclosure, those skilled in the art will appreciate that the radial torque engine of the invention has one or more pistons that reciprocate within a cylinder at a constant radius in a plane perpendicular to the central engine axis. The cylinder and cylinder head are held in a fixed position with respect to the central axis by an engine housing and a cylinder support. The piston is fixed to a piston rod which, in turn, is supported by a torque arm rotatably mounted on the engine shaft. The torque arm includes a torque sleeve which encircles the engine shaft and forms a continuous concentric ring about the shaft in and outside of the engine housing except, of course, where the cylinder support is located on the shaft. The torque sleeve is fixed to a disc brake mechanism that limits the motion of the pistons when combustion occurs. Upon ignition and combustion, the brake holds the pistons by holding the torque sleeve stationary while the piston and cylinder heads are forced apart, only the cylinder and the engine housing in which it is contained and the shaft are in rotary motion.

The piston and the cylinder head are at maximum distance apart when the shock absorbers strike each other. At this time, the brake is released allowing the movable part of the brake to rotate at the same angular velocity as the engine housing and the shaft. At this time, the pistons, cylinder, engine shaft, the housing, torque sleeve and the like are rotating at the same angular velocity and in the same direction.

After ignition and the power stroke, the piston is returned to the cylinder toward the cylinder head for another power stroke via the bias springs attached to the engine housing and torque sleeve. When the fuel is ignited, the spring tends to hold the piston and the cylinder head together but the force of combustion is greater than the opposing spring force. This spring force, however, is sufficient to compress the fuel mixture to the desired pressure. The air-fuel mixture continues to be compressed after ignition because the force on the pistons of the burning mixture has not exceeded the momentum of the moving components. The compresion ratio is at maximum when the piston stops moving into the cylinder at which time the power stroke begins. Before the spring can return the piston at the end of the power stroke, the exhaust port opens to reduce the pressure. The exhaust valves open near the end of the power stroke permitting the escape of exhaust gases and reducing the pressure in the cylinder. Simultaneously, the intake ports are uncovered by the piston and the compressed fuel-air charge from within the engine housing flows into the cylinder expelling the exhaust gases.

The engine housing does not stop when the shock absorbers strike each other because the force of combustion combined with a mass larger than the piston assembly gives the engine housing enough angular momentum to force or maintain the mass in rotary motion. The number of revolutions or time required for the springs to return the piston into the cylinder depends, of course, upon the load, angular velocity of the shaft and the bias spring tension.

**Claims**

1. A rotary-piston internal combustion engine comprising a rotary combustion chamber housing (48, 48a) connected to a first shaft (28) which is mounted for rotation in a fixed structure (10), the hosing (48, 48a) being rotatable about the axis of the shaft (28), a piston (40, 40a) which is movable circumferentially with respect to the axis of the first shaft (28) in a co-operating circumferentially-extending combustion chamber (38, 38a) within said housing (48, 48a), the piston (40, 40a) being operatively connected to a second shaft (44) rotatably mounted in the stationary structure (10) and coaxial with the first shaft (28), spring biassing means (58, 60) acting between the said housing (48, 48a) and the piston (40, 40a) to cause the piston to move relatively to the said housing (48, 48a) in a compression stroke in the combustion chamber (38, 38a) to compress a fuel mixture within the combustion chamber, ignition means (318) for igniting the compressed fuel mixture in the combustion chamber (38, 38a) at a predetermined position of the piston (40, 40a) thereby to initiate a power stroke, and means (50) for holding the piston (40, 40a) stationary during at least the commencement of the power stroke whereby the rotary combustion chamber housing (48, 48a) and the first shaft are caused to rotate, characterised in that the piston (40, 40a) is operatively connected with a second shaft in the form of a sleeve (44) journalled for rotation on the first shaft (28) about the axis thereof, and that the said means (50) for holding the piston stationary comprises a brake (52, 54, 56) acting between the stationary structure (10) and the sleeve (44), and that the spring biassing means (58, 60) comprises at least one coil spring (58, 60) having ends operatively connected respectively to the first shaft (28) and to the sleeve (44), and which includes means (354, 356, 350, 358, 346, 80) for adjusting the biassing spring means so as to vary the compression ratio of the engine.

2. An engine as claimed in Claim 1, in which the brake (50) comprises a disc (52) connected to the sleeve (44) and a pair of brake members (54, 56) mounted one on each side of the disc (52) between it and the stationary structure (10).

3. An engine as claimed in Claim 2, in which the disc (52) and brake members (54, 56) have axially-facing contacting friction faces (98, 100, 102), the brake members (54, 56) and the stationary structure (10) having co-operating generally axially-facing wedging surfaces (104, 106) arranged to cause engagement of the friction faces (98, 100, 102) on movement of the brake members (54, 56) in the opposite direction to the said rotation of the combustion chamber housing (48, 48a) and the first shaft (28).

4. An engine as claimed in Claim 1, in which the brake (50) comprises a first portion (54, 56) fixed relative to the stationary structure (10) and a second portion (52) fixed relative to the sleeve (44), the said first portion of the brake member comprising a pair of brake shoes (54, 56) positioned one on either side of the second portion, the second portion comprising a brake disc (52) fixed relative to the sleeve (44) for rotation therewith, the disc (52) having surfaces (100, 102) thereon adapted for frictional engagement with the brake shoes (54, 56).

**Revendications**

1. Moteur à combustion interne à pistons rotatifs, comprenant un carter tournant à chambre de combustion (48, 48a) relié à un arbre fixe (28) qui est monté à rotation dans une structure fixe (10), le carter (48, 48a) pouvant tourner autour de l'axe de l'arbre (28), un piston (40, 40a) qui est déplaçable circonférentiellement par rapport à l'axe du premier arbre (28) dans une chambre de combustion coopérante (38, 38a) s'étendant circonférentiellement à l'intérieur dudit carter (48, 48a), le piston (40, 40a) étant relié fonctionnellement à un second arbre (44) monté à rotation dans la structure stationnaire (10) et coaxialement au premier arbre (28), des moyens de poussée élastiques (58, 60) agissant entre ledit carter (48, 48a) et le piston (40, 40a) pour obliger le piston à se déplacer par rapport audit carter (48, 48a) dans une course de compression dans la chambre de combustion (38, 38a) afin de comprimer un mélange combustible à l'intérieur de la chambre de combustion (38 38a), un moyen d'allumage (318) pour enflammer le mélange combustible comprimé se trouvant dans la chambre de combustion dans une position prédéterminée du piston (40, 40a) en vue d'amorcer une course de détente, et un moyen (50) pour maintenir stationnaire le piston (40, 40a) pendant au moins le début de la course de détente de manière que le carter (48, 48a) tournant à chambre de combustion et le premier arbre soient mis en rotation, caractérisé en ce que ce piston (40, 40a) est relié fonctionnellement à un second arbre en forme de manchon (44) monté sur le premier arbre (28) de façon à tourner autour de son axe et en ce que ledit moyen (50) pour maintenir stationnaire le piston comprend un frein (52, 54, 56) agissant entre la structure stationnaire (10) et le manchon (44), et en ce que les moyens de poussée élastiques (58, 60) comprennent au moins un ressort hélicoïdal (58, 60) comportant des extrémités reliées fonctionnellement au premier arbre (28) et au manchon (44), et qui comprend des moyens (354, 356, 350, 358, 346, 80) pour régler les moyens élastiques de poussée en vue de faire varier le taux de compression du moteur.

2. Moteur selon la revendication 1, dans lequel le frein (50) comprend un disque (52) relié au manchon (44) et une paire d'éléments de freinage (54, 56) montés respectivement de chaque côté du disque (52) entre celui-ci et la structure stationnaire (10).

3. Moteur selon la revendication 2, dans lequel le disque (52) est les éléments de freinage (54, 56) comportent des faces de contact par friction (98, 100, 102) dirigées axialement l'une vers l'autre, les éléments de freinage (54, 56) et la structure stationnaire (10) comportant des surfaces de coincement (104, 106) dirigées axialement l'une vers l'autre et coopérant pour produire un contact des faces de friction (98, 100, 102) lors d'un mouvement des éléments de freinage (54, 56) dans la direction opposée à ladite rotation du carter à chambre de combustion (48, 48a) et du premier arbre (28).

4. Moteur selon la revendication 1, caractérisé en ce que le frein (50) comprend une première partie (54, 56) fixe par rapport à la structure stationnaire (10) et une seconde partie (52) fixe par rapport au manchon (44), ladite première partie de l'élément de freinage comprenant une paire de patins de frein (54, 56) positionnés respectivement de part et d'autre de la seconde partie, la seconde partie comprenant un disque de frein (52) fixé sur le manchon (44) de manière à tourner avec lui, le disque (52) comportant des surfaces (100, 102) adaptées pour entrer en contact frottant avec les patins de frein (54, 56).

## Patentansprüche

1. Eine Rotationskolben-Brennkraftmaschine mit

einem Rotationsbrennkammergehäuse (48, 48a), welches mit einer in einem feststehenden Aufbau (10) drehbar gelagerten ersten Welle (28) verbunden und um deren Achse drehbar ist,

einem Kolben (40, 40a), welcher bezüglich der Achse der ersten Welle (28) in Umfangsrichtung in einer kooperierenden, sich in Umfangsrichtung erstreckenden Brennkammer (38, 38a) im Gehäuse (48, 48a) bewegbar und mit einer im feststehenden Aufbau (10) drehbar gelagerten, zur ersten Welle (28) koaxialen zweiten Welle (44) betriebsmäßig verbunden ist,

einem vorspannenden Federmittel (58, 60), welches zwischen dem Gehäuse (48, 48a) und dem Kolben (40, 40a) wirkt, um zu bewirken, daß der Kolben sich bezüglich des Gehäuses (48, 48a) in einem Verdichtungshub in der Brennkammer (38, 38a) zur Verdichtung eines Kraftstoffgemisches in derselben bewegt,

einem Zündungsmittel (318) zum Zünden des verdichteten Kraftstoffgemisches in der Brennkammer (38, 38a) bei einer vorgegebenen Position des Kolbens (40, 40a), um einen Arbeitshub einzuleiten, und

einem Mittel (50), um den Kolben (40, 40a) wenigstens während des Beginns des Arbeitshubes stationär zu halten, so daß das Rotationsbrennkammergehäuse (48, 48a) und die erste Welle veranlaßt werden, sich zu drehen, dadurch gekennzeichnet, daß

der Kolben (40, 40a) mit einer zweiten Welle in Form einer Hülse (44) betriebsmäßig verbunden ist, welche auf der ersten Welle (28) um deren Achse drehbar gelagert ist, und daß

das Mittel (50) zum Stationärhalten des Kolbens eine Bremse (52, 54, 56) umfaßt, welche zwischen dem feststehenden Aufbau (10) und der Hülse (44) wirkt, und daß

das Vorspannende Federmittel (58, 60) wenigstens eine Spiralfeder (58, 60) mit Enden umfaßt, welche mit der ersten Welle (28) bzw. mit der Hülse (44) betriebsmäßig verbunden sind, und Mittel (354, 356, 350, 358, 346, 80) zur Einstellung des vorspannenden Federmittels zum Verändern des Verdichtungsverhältnisses der Maschine aufweist.

2. Eine Maschine nach Anspruch 1, bei welcher die Bremse (50) eine mit der Hülse (44) verbundene Scheibe (52) und ein Paar von Bremsgliedern (54, 56) aufweist, von denen eines auf jeder Seite der Scheibe (52) zwischen derselben und dem stationären Aufbau (10) angebracht ist.

3. Eine Maschine nach Anspruch 2, bei welcher die Scheibe (52) und die Bremsglieder (54, 56) axial gerichtete, berührende Reibflächen (98, 100, 102) aufweisen, wobei die Bremsglieder (54, 56) und der stationäre Aufbau (10) zusammenwirkende, im allgemeinen axial gerichtete Keilflächen (104, 106) aufweisen, welche so angeordnet sind, daß sie bei Bewegung der Bremsglieder (54, 56) in der der Drehung des Brennkammergehäuses (48, 48a) und der ersten Welle (28) entgegengesetzten Richtung das Einrücken der Reibflächen (98, 100, 102) bewirken.

4. Eine Maschine nach Anspruch 1, bei welcher die Bremse (50) einen bezüglich des stationären Aufbaus (10) feststehenden ersten Teil (54, 56) und einen bezüglich der Hülse (44) feststehenden zweiten Teil (52) aufweist, wobei der erste Teil des Bremsgliedes ein Paar von Bremsschuhen (54, 56) aufweist, welche jeweils auf der einen bzw. der anderen Seite des zweiten Teils angeordnet sind, und der zweite Teile eine Bremsscheibe (52) aufweist, welche mit der Hülse (44) zur gemeinsamen Drehung verbunden ist und Flächen (100, 102) zum reibschlüssigen Angriff an den Bremsschuhen (54, 56) aufweist.

III

16

20

20

18

112

10

12

20

18

16

FIG 2

II

12

112

16

10

16

14

20

II

FIG 1

0036047

306

184

186 182

224

28

192

FIG 8

374 408 402 404

86

84

89 88 87 90

FIG 10

219

190

210

223

226 216

210 a

212

214

204

221

217

FIG 6

FIG 3

FIG 4

**0 036 047**

FIG 5a

FIG 5b

4

FIG 5 c

FIG 5 d

**0 036 047**

FIG 5g

FIG 5 h

FIG 5 e

FIG 5 f

FIG 5 i

FIG 5 j

FIG 5k

FIG 5 L

FIG 5 m

FIG 7a

FIG 7b

10

FIG 9